# FASCICULE DE BREVET EUROPEEN

(11) **EP 2 822 917 B1**
(45) Date de publication et mention de la délivrance du brevet: **31.10.2018**
(21) Numéro de dépôt: 13720056.4
(22) Date de dépôt: 06.03.2013
(51) Int. Cl.: C04B 28/02

(54) **BÉTON AUTO-NIVELANT**
SELBSTNIVELLIERENDER BETON
SELF-LEVELLING CONCRETE

(30) Priorité: 07.03.2012 FR 1252083
(43) Date de publication de la demande: 14.01.2015
(73) Titulaire: Saint-Gobain Centre de Recherches et d'Etudes Européen, 92400 Courbevoie (FR)
(72) Inventeur: CONSALES, Thierry, Claude, F-84210 Pernes Les Fontaines (FR)
(74) Mandataire: Nony
(86) Numéro de dépôt international: PCT/IB2013/051768
(87) Numéro de publication internationale: WO 2013/132442

(56) Documents cités:
- FR-A1- 2 937 636
- Hpal Saint Gobain: "HPAL for feeder channels", , 1 January 2006 (2006-01-01), XP055202907, Retrieved from the Internet: URL:http://www.sefpro.com/uploadedFiles/SG sefpro/Documents/HPALforfeeder2006.pdf [retrieved on 2015-07-16]

## Description

### Domaine technique

La présente invention est relative à un béton non façonné, destiné notamment à la réalisation d'une sole d'un four de verrerie. L'invention concerne également un procédé de fabrication d'un béton durci à partir de ce béton non façonné.

### Etat de la technique

L'industrie du verre utilise généralement pour la construction de ses fours des produits réfractaires fondus et coulés, ou obtenus par frittage, très résistants à la corrosion par le verre, et se présentant sous la forme de blocs ou de dalles.

L'infiltration de verre entre les dalles des soles des fours à verre provoque la corrosion des matériaux utilisés pour former la couche sous-jacente aux dalles, appelée « chape », puis la corrosion des dalles elles-mêmes. Pour limiter l'infiltration de verre en fusion entre les dalles, on peut couler un béton frais pour jointoyer ces dalles.

Le brevet FR-B-2 458 520 décrit un béton non façonné destiné à la fabrication de tels bétons. Ce béton non façonné, à base de particules d'un matériau réfractaire fondu et coulé contenant une matrice vitreuse, est largement utilisé. Le béton frais obtenu présente cependant l'inconvénient de ne pas être pompable avec des pompes produisant des pressions d'aspiration inférieures ou égales à 180 bar.

Des bétons frais réfractaires pompables sont utilisés pour le jointoiement des blocs de fours d'élaboration des métaux. Les contraintes dans cette application sont cependant très différentes de celles rencontrées dans l'application aux fours de verrerie. Les conditions de corrosion des fours par un verre ou par un métal en fusion sont également différentes. Certaines impuretés, tolérées dans les fours d'élaboration des métaux, sont inacceptables pour la fabrication du verre. En particulier, les matériaux réfractaires utilisés dans les fours de verrerie ne doivent pas générer de défauts tels que le lâcher de pierres par morcellement du matériau réfractaire dans le bain de verre en fusion, ou la production de bulles. Un béton réfractaire destiné à un four d'élaboration des métaux n'est donc pas, *a priori*, utilisable pour un four de verrerie.

FR 2 832 403 décrit un béton frais utilisable dans les fours verriers et facilement pompable.

La fabrication d'un béton durci à partir du béton non façonné décrit et revendiqué dans FR 2 832 403 nécessite classiquement une activation par un ajout d'eau, de manière à constituer un béton frais, puis, après coulage du béton frais, l'application d'une vibration, en général à l'aide d'une règle vibrante. Cette opération de vibration peut être longue.

Cette opération est également délicate et nécessite un savoir-faire particulier. En effet, une vibration qui n'est pas effectuée de façon homogène peut entraîner de la ségrégation dans le béton frais coulé et, en conséquence, des fissurations lors du séchage ou lors de l'attrempage. Ce problème est d'autant plus critique que le béton frais coulé recouvre une grande surface.

FR 2 937 636 décrit un béton frais utilisable dans les fours verriers et présentant un caractère auto nivelant grâce à la présence de zircone dans la fraction des particules du béton non façonné ayant une taille inférieure à 10 µm, en une quantité comprise entre 35% et 75% en masse de ladite fraction. Ce béton peut cependant conduire à la présence de défauts, tels que des pierres et des cordes, dans le verre.

Pour certains types de verres, notamment pour les verres de haute qualité, par exemple des verres sodocalciques extra blancs, de tels défauts doivent être évités.

Il existe également un besoin pour un béton non façonné permettant de fabriquer un béton frais, facilement pompable, ne nécessitant pas une opération de vibration pour être mis en place, ne conduisant pas à une ségrégation, et permettant de fabriquer un béton durci et fritté adapté à la fabrication d'un verre de haute qualité.

La présente invention vise à satisfaire, au moins partiellement, ces besoins.

### Résumé de l'invention

L'invention propose un béton non façonné, destiné notamment à la réalisation d'une sole d'un four de verrerie, comportant, en pourcentages en masse,
(a) 87% à 98% de particules comportant plus de 90% en masse d'alumine,
(b) 1% à 7% de particules de fumée de silice,
(c) 1% à 8% de particules d'un ciment hydraulique,
la fraction desdites particules ((a)+(b)+(c)) ayant une taille inférieure à 40 µm étant distribuée, en pourcentages en masse par rapport à la masse du béton non façonné, de la manière suivante :

| | |
|---|---|
| - fraction < 0,5 µm : | ≥ 4%, |
| - fraction < 2 µm : | ≥ 5 %, |
| - fraction < 10 µm : | ≥ 19%, |
| - fraction < 40 µm : | 34% - 52%, |
| - fraction comprise entre 2 µm et 40 µm : | 26,5% - 34%, |

la teneur en ZrO₂, en pourcentages en masse sur la base du béton non façonné étant inférieure à 2%, et la teneur en fibres organiques, en pourcentage en masse sur la base du béton non façonné étant inférieure ou égale à 0,03%.

Comme on le verra plus en détail dans la suite de la description, un béton frais fabriqué à partir d'un tel béton non façonné est
- pompable avec des pressions d'aspiration inférieures ou égales à 180 bar,
- « auto nivelant », c'est-à-dire qu'il peut être mis en place sans opération de vibration, et
- ne conduit pas à une ségrégation préjudiciable.

Enfin, le béton durci obtenu à partir de ce béton frais présente un comportement dilatométrique satisfaisant. En contact avec du verre en fusion, il ne génère que peu ou pas de défaut dans le verre. Il est donc parfaitement apte à être utilisé pour la réalisation de soles d'un four de verrerie.

Le béton non façonné peut encore comporter une ou plusieurs des caractéristiques optionnelles suivantes :
- Le ciment hydraulique constitue de 3% à 6% de la masse du béton non façonné.
- Les particules du béton non façonné se répartissent de la manière suivante, en pourcentages massiques :

| | |
|---|---|
| - fraction < 0,5 µm : | ≥ 5%, de préférence ≥ 6% et/ou ≤ 8%, de préférence ≤ 16%, et/ou |
| - fraction < 2 µm : | ≥ 7,5%, de préférence ≥ 8%, de préférence ≥ 10% et/ou de préférence ≤ 15%, de préférence ≤ 13%, et/ou |
| - fraction < 10 µm : | ≥ 25%, de préférence ≥ 27% et/ou, de préférence ≤ 40% de préférence ≤ 35%, et/ou |
| - fraction < 40 µm : | ≥ 35%, de préférence ≥ 37% et/ou de préférence ≤ 50%, de préférence ≤ 47%, de préférence ≤ 43%, et/ou |

- fraction comprise entre 2 µm et 40 µm : ≥ 27% et/ou ≤ 32%, de préférence ≤ 30%.
- La taille maximale desdites particules ((a)+(b)+(c)) est inférieure ou égale à 10 mm.
- La fraction desdites particules ((a)+(b)+(c)) de taille inférieure à 500 µm représente plus de 50% de la masse dudit béton non façonné.
- La fraction desdites particules ((a)+(b)+(c)) de taille comprise entre 40 µm et 500 µm est comprise entre 8% et 25% par rapport à la masse dudit béton non façonné.
- Le béton non façonné présente une teneur en ZrO₂ inférieure à 1,5%, de préférence inférieure à 1%, de préférence inférieure à 0,5%.
- Le béton non façonné présente la composition massique suivante, pour un total de plus de 95% :

| | |
|---|---|
| - Al₂O₃ : | 81,5% - 98,5%, de préférence ≥ 93%, et/ou ≤ 97% |
| - SiO₂: | ≥ 0,8%, de préférence ≥ 1,5%, et/ou ≤ 4%. |

- Le béton non façonné comporte un agent tensio-actif, de préférence entre 0,075% à 1% d'un agent tensio-actif.
- L'agent tensio-actif est un éther polycarboxylate modifié.
- Le béton non façonné comporte un accélérateur de prise.

L'invention concerne également un béton frais, un béton durci et un béton durci et fritté, en particulier sous la forme d'une sole d'un four de verrerie, obtenus à partir d'un béton non façonné selon l'invention.

L'invention concerne aussi un four verrier comportant un béton durci et fritté selon l'invention, en particulier dans une zone dans laquelle ce béton est en contact avec du verre en fusion, notamment avec un verre de haute qualité comme un verre sodocalcique extra blanc. Un béton durci et fritté selon l'invention peut notamment être utilisé comme joint, en particulier pour jointoyer des blocs ou des dalles d'une sole, comme sous-couche d'une sole ou sous la forme d'un bloc ou d'une dalle.

L'invention concerne encore un procédé de fabrication d'un béton durci, comportant les étapes successives suivantes :
1) préparation d'un béton non façonné selon l'invention ;
2) activation dudit béton non façonné de manière à obtenir un béton frais ;
3) mise en place dudit béton frais ;
4) durcissement dudit béton frais de manière à obtenir un béton durci ;
5) frittage dudit béton durci.

De préférence, à l'étape 1), on utilise, comme source de fumée de silice, une matière première comportant plus de 90% de silice en masse, se présentant sous la forme d'une poudre dont les particules ont une taille comprise entre 0,1 et 5 µm et une taille médiane inférieure à 1 µm, voire inférieure à 0,6 µm, comme la fumée de silice commercialisée par la Société Européenne des Produits Réfractaires.

De préférence, à l'étape 2), on active ledit béton non façonné en y ajoutant une quantité d'eau de préférence supérieure à 5%, ou supérieure à 6%, et/ou inférieure à 9%, inférieure à 8%, inférieure à 7%, de préférence comprise entre 5,5 et 6,9% en masse par rapport à la masse dudit béton non façonné.

De préférence, à l'étape 3), le béton frais est pompé au moyen d'une pompe produisant une pression d'aspiration inférieure ou égale à 180 bar et/ou acheminé sur le lieu du coulage par écoulement, par gravité, dans une goulotte.

A l'étape 3), le béton frais peut être coulé de manière que le béton durci constitue une sole d'un four de verrerie.

De préférence, le béton frais est coulé. De préférence, il ne subit aucune opération de vibration avant son durcissement.

De préférence, à l'étape 5), le béton durci est fritté à une température comprise entre 1000°C et 1500°C, de préférence sous air, de préférence à pression atmosphérique. La durée de frittage est adaptée en fonction des dimensions du produit à fritter. La durée du palier de frittage est généralement comprise entre 1 et 20 heures, de préférence entre 5 à 10 heures. Dans les applications où, dans sa position de service, le béton durci peut être soumis à des conditions de chauffage susceptibles de le fritter, le béton durci peut être mis en position sans avoir été fritté, puis fritté *in situ.*

### Définitions

- Par « béton non façonné », on entend un mélange particulaire apte à prendre en masse après activation.
- L'activation est un processus de prise en masse. L'état activé résulte classiquement d'une humidification d'un béton non façonné avec de l'eau ou un autre liquide. Pendant ce processus, un béton non façonné humide est appelé « béton frais ».
- Une masse solide obtenue par la prise en masse d'un béton frais est appelée « béton durci». Un béton durci est classiquement constitué d'un ensemble de particules grossières liées par une matrice.
- Un ciment hydraulique, ou « liant hydraulique », est un liant qui, lors de l'activation, génère une prise et un durcissement hydraulique, généralement à température ambiante.
- La « taille » des particules est donnée classiquement par une caractérisation de distribution granulométrique fournie par un granulomètre laser, par exemple par la société HORIBA. Il est clair que les particules ayant une taille inférieure à 10 µm (qui constituent la « fraction < 10 µm ») sont comptabilisées dans les 34% à 52% des particules ayant une taille inférieure à 40 µm, que les particules ayant une taille inférieure à 2 µm sont comptabilisées dans les particules ayant une taille inférieure à 40 µm et dans celles ayant une taille inférieure à 10 µm, etc.
- On appelle « taille médiane » d'un ensemble de particules, notée D₅₀, la taille divisant les particules de cet ensemble en première et deuxième populations égales en masse, ces première et deuxième populations ne comportant que des particules présentant une taille supérieure, ou inférieure respectivement, à la taille médiane.
- On appelle « taille maximale » le percentile 99,5 (D_{99,5}) dudit béton non façonné.
- Par « impuretés », on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2%, inférieure à 1%, inférieure à 0,5%, voire sensiblement nulle.
- Lorsqu'il est fait référence à ZrO₂ ou à la zircone il y a lieu de comprendre ZrO₂ et les traces de HfO₂. En effet, un peu de HfO₂, chimiquement indissociable du ZrO₂ dans un procédé de fusion et présentant des propriétés semblables, est toujours naturellement présent dans les sources de zircone à des teneurs généralement inférieures à 2%. L'oxyde d'hafnium n'est alors pas considéré comme une impureté.
- Tous les pourcentages de la présente description sont des pourcentages en masse, sauf mention contraire.

### Description détaillée

### Nature des particules

De préférence, la somme des ensembles (a), (b) et (c) représente plus de 95%, de préférence plus de 97%, de préférence plus de 98%, voire plus de 99% de la masse du béton non façonné.

De préférence, la teneur en zircone du béton non façonné, en pourcentage en masse sur la base de la masse du béton non façonné est inférieure à 1,5%, de préférence inférieure à 1%, voire inférieure à 0,5%, voire est sensiblement nulle. Dans un mode de réalisation, la zircone est une impureté, c'est-à-dire n'est pas ajoutée de manière volontaire.

De préférence, le béton non façonné présente la composition massique suivante, pour un total de plus de 95%, de préférence pour un total de plus de 97%, de préférence pour un total de plus de 98%, voire pour un total de plus de 98,9% :

| | |
|---|---|
| - Al₂O₃ : | 81,5% - 98,5% |
| - SiO₂ : | 0,8% - 7%. |

De préférence,

| | |
|---|---|
| - Al₂O₃ : | ≥ 85%, de préférence ≥ 87%, de préférence ≥ 90%, de préférence ≥ 92%, de préférence ≥ 93%, et/ou ≤ 97%, et/ou |
| - SiO₂ : | ≥ 1%, de préférence ≥ 1,5%, de préférence ≥ 2%, et/ou ≤ 5%, de préférence ≤ 4%. |

Le béton non façonné peut également présenter une composition, en pourcentage en masse et un total de plus de 97%, de préférence pour un total de plus de 98%, voire pour un total de plus de 98,9%, telle que :

| | |
|---|---|
| - Al₂O₃ : | 93% - 97%, |
| - SiO₂ : | 2% - 4%. |

Dans un mode de réalisation préféré, l'ensemble ((a) + (b) + (c)) présente une composition dont le complément à 100% à Al₂O₃, SiO₂ et ZrO₂ est constitué de CaO (qui résulte classiquement de la présence du ciment hydraulique) et d'impuretés. Les impuretés peuvent être par exemple Na₂O, K₂O, des particules métalliques, et/ou TiO₂.

Les particules (**a**) peuvent être constituées à partir d'une ou plusieurs sources de matières premières, présentant des analyses chimiques différentes. Les distributions granulométriques des particules peuvent également différer selon lesdites sources.

Les sources suivantes peuvent notamment être utilisées :
- un produit réfractaire électrofondu tels que le JARGAL M, produit et commercialisé par la Société Européenne des Produits Réfractaires, présentant l'analyse chimique typique suivante : Al₂O₃ : 95%, SiO₂ : 0,5%, Na₂O : 4%, autres : 0,5%, la taille des particules de JARGAL M étant de préférence supérieure à 50 µm et inférieure à 10 mm ;
- de l'alumine électrofondue, se présentant sous la forme d'une poudre dont les particules ont une taille de préférence comprise entre 10 µm et 10 mm ;
- de l'alumine tabulaire, se présentant sous la forme d'une poudre dont les particules ont une taille de préférence comprise entre 10 µm et 10 mm;
- de l'alumine calcinée, se présentant sous la forme d'une poudre dont les particules ont une taille de préférence comprise entre 1 µm et 50 µm ;
- de l'alumine réactive, ou un mélange d'alumines réactives, contenant plus de 99% d'Al₂O₃, la taille médiane des particules d'alumine réactive pouvant de préférence varier de 0,5 µm à 3 µm.

De préférence, l'ensemble des particules (a) du béton non façonné :
- présente une teneur massique en alumine supérieure à 92%, de préférence supérieure à 95%, de préférence supérieure à 98%, de préférence supérieure à 99%, et/ou
- représente plus de 90%, de préférence plus de 91% et/ou moins de 96%, de préférence moins de 94% de la masse du béton non façonné, et/ou
- comporte de l'alumine réactive en une quantité massique supérieure à 7%, supérieure à 10%, supérieure à 12%, et/ou inférieure à 18%, inférieure à 16%, inférieure à 15%, sur la base de la masse du béton non façonné, et/ou
- comporte de l'alumine calcinée en une quantité massique supérieure à 10%, supérieure à 14%, et/ou inférieure à 25%, inférieure à 22%, inférieure à 20%, et/ou
- comporte de l'alumine électrofondue en une quantité massique supérieure à 50%, supérieure à 55%, supérieure à 60%, et/ou inférieure à 75%, inférieure à 70%, inférieure à 65%, sur la base de la masse du béton non façonné.

De préférence, l'ensemble des particules (b) du béton non façonné :
- présente une teneur massique en silice supérieure à 90%, voire supérieure à 92%, voire supérieure à 95%, et/ou
- représente plus de 2%, de préférence plus de 3% et/ou moins de 6%, de préférence moins de 5% de la masse du béton non façonné.

L'ensemble de particules (**b**) est de préférence une poudre de fumée de silice commercialisée par la Société Européenne des Produits Réfractaires. Cette poudre de silice vitreuse contient plus de 93% de silice (SiO₂), les particules ayant une taille comprise entre 0,1 et 5 µm et une taille médiane de 0,5 µm.

Avantageusement, la présence de silice permet de réduire la quantité d'eau nécessaire pour rendre le béton frais coulable. Il semble que les très fines particules de silice se répartissent bien et permettent ensuite d'obtenir une bonne liaison dans le béton durci et fritté. Pour cette raison, on considère qu'il est préférable d'avoir entre 3% et 5% de fumée de silice dans un béton non façonné selon l'invention.

L'ensemble de particules (**c**) de ciment hydraulique constitue de préférence plus de 3% et/ou moins de 6% en masse du béton non façonné. Le ciment hydraulique (c) peut être un ciment alumineux ou un mélange de différents ciments. Pour limiter la teneur en chaux (CaO), on préfère utiliser un ciment à forte teneur en alumine, tel que le ciment CA25 de la société Almatis. Le ciment CA25 contient plus de 78% d'Al₂O₃ et moins de 19% de CaO. Les particules du ciment CA25 ont une taille médiane d'environ 8 µm.

De préférence, la teneur en alumine du ciment hydraulique est supérieure à 60% en masse. De préférence encore, le ciment hydraulique contient, comme constituants principaux, de l'alumine et des aluminates de calcium.

Les fibres organiques (**d**) sont par exemple des fibres de polypropylène, de polyacrylonitrile ou de polyvinyl alcool.

Dans un mode de réalisation, le béton non façonné comporte plus de 0,01% de fibres. De préférence la longueur moyenne (moyenne arithmétique) de ces fibres est supérieure à 6 mm, de préférence comprise entre 18 et 24 mm.

La présence de fibres organiques permet d'améliorer la résistance à cru du béton durci et limite la formation de fissures lors de son séchage. Par ailleurs, les fibres organiques sont éliminées lors du frittage ou de la phase de montée en température du four, créant ainsi un réseau de petits canaux permettant une évacuation plus efficace de l'eau.

Ces fibres ne sont cependant pas indispensables.

En outre, l'ajout de fibres réduit la propriété du béton frais à être auto nivelant. Au-delà de 0,03%, la présence de fibres empêche le béton frais d'être auto nivelant. De préférence, le béton non façonné comporte moins de 0,03%, voire ne comporte sensiblement pas de fibres. Dans un mode de réalisation, le béton non façonné comporte moins de 0,03%, voire ne comporte sensiblement pas de fibres présentant une longueur supérieure à 6 mm, en particulier comprise entre 18 et 24 mm.

De préférence, le béton non façonné selon l'invention comporte encore au moins un agent tensio-actif (**e**), de préférence dans une proportion de 0,1% à 1%, de préférence supérieure ou égale à 0,2% et/ou inférieure à 0,5%, de préférence encore inférieure à 0,4%. Le rôle de cet agent tensio-actif est notamment de modifier les propriétés rhéologiques du béton frais pour en faciliter le pompage. On utilise de préférence des agents tensio-actifs choisis parmi les polyphosphates de sodium à longue chaine, les polyacrylates de sodium, les polyacrylates d'ammonium, les polycarboxylates modifiés, et leurs mélanges. De préférence, les agents tensio-actifs sont choisis parmi les polycarboxylates modifiés, de préférence de type éther polycarboxylate modifié, de préférence encore à base de polyéthylène glycol.

De préférence, le béton non façonné selon l'invention comporte encore au moins un accélérateur de prise (**f**), de préférence dans une proportion de 0,01% à 0,15%. Les accélérateurs de prise sont bien connus par l'homme du métier.

### Distribution granulométrique

De préférence, la taille maximale des particules d'un béton non façonné selon l'invention est inférieure ou égale à 10 mm, de préférence inférieure ou égale à 8 mm, de préférence inférieure ou égale à 5 mm.

Dans un mode de réalisation, la fraction des particules de taille supérieure à 500 µm est supérieure à 40%, voire supérieure à 44%.

Dans un mode de réalisation,
- la fraction des particules de taille supérieure à 500 µm est supérieure à 40%, supérieure à 44% et inférieure à 50%, et/ou
- la fraction des particules de taille supérieure à 1250 µm est supérieure à 8%, supérieure à 15%, supérieure à 19%, supérieure à 23% et inférieure à 27%, et/ou
- la fraction des particules de taille supérieure à 2500 µm est supérieure à 4%, supérieure à 10%, supérieure à 13% et inférieure à 17%.

De préférence, la fraction des particules du béton non façonné de taille inférieure à 500 µm représente plus de 50% en masse dudit béton non façonné.

De préférence, la fraction des particules du béton non façonné de taille comprise entre 40 µm et 500 µm est comprise entre 8% et 25%, de préférence est supérieure à 9%, supérieure à 11% et/ou inférieure à 25%, inférieure à 23%, inférieure à 21%, inférieure à 17%, inférieure à 15% sur la base de la masse dudit béton non façonné.

De préférence, les particules du béton non façonné se répartissent de la manière suivante, en pourcentages massiques :
- fraction < 0,5 µm : ≥ 5%, de préférence ≥ 6% et/ou ≤ 8%, et/ou
- fraction < 2 µm : ≥ 7,5%, de préférence ≥ 8%, de préférence ≥ 10% et/ou ≤ 16%, de préférence ≤ 15%, de préférence ≤ 13%, et/ou
- fraction < 10 µm : ≥ 25%, de préférence ≥ 27% et/ou ≤ 40%, de préférence ≤35%, et/ou
- fraction < 40 µm : ≥ 35%, de préférence supérieure à 37% et/ou ≤ 50%, de préférence ≤ 47%, de préférence inférieure à 43%, et/ou
- fraction comprise entre 2 µm et 40 µm : ≥ 27% et/ou ≤ 32%, de préférence ≤ 30%.

De préférence, les particules du béton non façonné se répartissent de la manière suivante :

| | |
|---|---|
| - fraction < 0,5 µm : | ≥ 5% |
| - fraction < 2 µm : | 7,5%- 16% |
| - fraction < 10 µm : | ≥ 19% |
| - fraction < 40 µm : | 34% - 50% |
| - fraction comprise entre 2 µm et 40 µm : | 26,5% - 34%. |

De préférence encore, les particules du béton non façonné se répartissent de la manière suivante :

| | |
|---|---|
| - fraction < 0,5 µm : | ≥ 6% |
| - fraction < 2 µm : | 8% - 15% |
| - fraction < 10 µm : | 25% - 40% |
| - fraction < 40 µm : | 35% - 47% |
| - fraction comprise entre 2 µm et 40 µm : | 27% - 32%. |

De préférence toujours, les particules du béton non façonné se répartissent de la manière suivante :

| | |
|---|---|
| - fraction < 0,5 µm : | 6% - 8% |
| - fraction < 2 µm : | 10% - 13% |
| - fraction < 10 µm : | 27% - 35% |
| - fraction < 40 µm : | 37% - 43% |
| - fraction comprise entre 2 µm et 40 µm : | 27% - 30%. |

Sans être liés par une théorie, les inventeurs considèrent qu'une proportion de particules d'une taille comprise entre 2 µm et 40 µm comprise entre 26,5% et 34% facilite la mise en place du béton frais sous son propre poids, lesdites particules favorisant le déplacement des particules les unes par rapport aux autres, et empêchant la ségrégation. Une proportion de particules d'une taille comprise entre 2 µm et 40 µm supérieure à 34% ou inférieure à 26,5% élimine le caractère « auto nivelant » du béton frais.

Des modèles de compaction comme le modèle de Fuller-Bolomey ou le modèle d'Andréasen peuvent être utilisés pour déterminer la distribution granulométrique la plus adaptée.

Un béton non façonné selon l'invention peut être conditionné en sac ou en fûts. De préférence, le béton non façonné est prêt à emploi, c'est-à-dire incorpore tous les constituants sauf l'eau.

### Utilisation

Pour fabriquer un béton frais à partir d'un béton non façonné de l'invention, on mélange intimement les différents composants avec une quantité d'eau (g) comprise entre 5% et 9%, voire moins de 8% ou moins de 7%, en pourcentage en masse par rapport à la masse dudit béton non façonné. La teneur en eau peut être ajustée en fonction du béton. Avantageusement, ce béton frais peut être acheminé directement dans le four de verrerie, par exemple pour réaliser la sous-couche de sole, par écoulement par gravité à l'intérieur d'une goulotte. Il peut également être pompé à l'aide d'une pompe à pistons. Il peut alors être mis en oeuvre par simple coulage sans vibration.

On laisse alors reposer le béton durci, selon l'invention, à température ambiante. La montée en température du four provoque ensuite un frittage du béton durci et conduit à un béton durci et fritté selon l'invention. Une température de frittage comprise entre 1000 et 1500°C est bien adaptée. Si le béton durci est fritté dans un four, le temps de maintien en palier peut être compris entre 1 et 20 heures, de préférence compris entre 5 et 10 heures.

De préférence, le frittage est effectué *in situ.*

Le béton non façonné de l'invention peut également servir à fabriquer des pièces de forme de dimensions diverses, et en particulier destinées à être assemblées dans un four de verrerie.

### Exemples

Les exemples non limitatifs qui vont suivre sont donnés en vue d'illustrer l'invention.

Le caractère « auto nivelant » et la ségrégation sont évalués par le test suivant :
25 kg de béton frais sont préparés dans un mélangeur, avec un temps de malaxage de 15 minutes, puis déversés dans une trémie préalablement huilée, en forme de pyramide tronquée, disposée pointe en bas, et présentant une hauteur 320 mm, une ouverture d'entrée de section carrée supérieure de 350 mm x 350 mm et une ouverture de sortie de section carrée inférieure de 130 x 130 mm initialement fermée par une trappe.

La trappe de la trémie est ensuite ouverte d'un coup sec et le béton frais se déverse sous son propre poids, à travers l'ouverture de sortie, dans l'extrémité supérieure (à 700 mm du sol) d'une gouttière rectiligne en PVC demi-circulaire préalablement huilée, présentant un diamètre de 170 mm et une longueur 1600 mm, l'extrémité inférieure de la gouttière étant à 380 mm du sol.

Le béton frais s'écoule dans la gouttière et se déverse dans un moule disposé sous la gouttière, sous l'extrémité inférieure de la gouttière. Le moule est un moule en bois de dimensions 300 mm x 300 mm x 60 mm, huilé et disposé horizontalement sur le sol.

On attend ensuite que le béton frais durcisse sous la forme d'une dalle.

Sur chacune des quatre faces latérales de la dalle, l'épaisseur de la dalle est mesurée aux deux extrémités et au milieu de la longueur de la face.

Le caractère auto nivelant (« AN ») est acquis si la surface supérieure de la dalle apparaît sensiblement lisse à l'oeil et si la différence « E » entre la plus petite épaisseur mesurée et la plus grande épaisseur mesurée est inférieure ou égale ou 2 mm sur chacune des quatre faces latérales.

Après étuvage à 110°C pendant 24 heures, la dalle est sciée en deux par son centre, exposant ainsi deux faces sciées. La ségrégation conduit les plus grosses particules à migrer en s'écartant de la face supérieure de la dalle. On considère qu'il y a ségrégation lorsque les faces sciées font apparaître une couche superficielle de laitance s'étendant, depuis la face supérieure de la dalle, sur une profondeur « e » de 3 mm ou plus.

Le tableau 1 fournit la composition des mélanges particulaires (a) + (b) + (c). Il indique également la distribution granulométrique des particules d'alumine électrofondue utilisées. L'alumine calcinée utilisée est l'alumine HVA FG commercialisée par Almatis.

La fumée de silice est une fumée de silice comportant plus de 90% de silice en masse, se présentant sous la forme d'une poudre dont les particules ont une taille comprise entre 0,1 et 5 µm et une taille médiane inférieure à 0,6 µm, commercialisée par la Société Européenne des Produits Réfractaires.

Le ciment utilisé est du ciment CA25R commercialisé par Almatis.

Le tableau 2 fournit les compositions chimiques des bétons frais testés, ainsi que les résultats des essais réalisés.

Tous les exemples incorporent 0,2% d'agent tensio-actif (polyphosphate de sodium à longue chaîne pour les exemples « comp 1 » à « comp 3 » et composé de la famille des éthers polycarboxylates modifiés pour les autres exemples). Le choix d'un tensio-actif parmi les tensio-actifs généralement utilisés par l'homme du métier sera guidé par les résultats d'essais simples, tels que ceux décrits dans la présente demande, en fonction des performances recherchées (densité du béton durci obtenu, propriétés dilatométriques du béton durci obtenu). Tous les exemples, sauf « comp 1 », « comp 2 » et « comp 3 » incorporent 0,1% d'un accélérateur de prise : le SILUBIT BL05, commercialisé par la société Zchimmer & Schwarz. Dans le tableau 2, le complément à 100% de Al₂O_{3 +} SiO_{2 +} ZrO_{2 +} fibres organiques + agent tensio-actif + accélérateur de prise est constitué de CaO et d'impuretés.

L'ajout d'eau (g) est fourni en pourcentage massique sur la base du béton non façonné.

Le tableau 2 fournit également la distribution des tailles de particules inférieures à 500 µm, mesurée au moyen d'un granulomètre laser HORIBA.

**Tableau 1**

| | Mélange particulaire (a) + (b) + (c), en pourcentages massiques | | | | | | |
|---|---|---|---|---|---|---|---|
| n° | Alumine électrofondue 0,5 mm - 3,5 mm | Alumine électrofondue 10 µm - 200 µm | Alumine électrofondue 40 µm - 1 mm | Alumine calcinée | Alumines réactives | Fumée de silice | Ciment |
| Comp 1 | 55 | 25 | 0 | 6 | 0 | 8 | 6 |
| Comp 2 | 55 | 25 | 0 | 6 | 0 | 8 | 6 |
| Comp 3 | 55 | 25 | 0 | 6 | 0 | 8 | 6 |
| Comp 4 | 39 | 1 | 26 | 13 | 13 | 3 | 5 |
| 1 | 39 | 6 | 20 | 14 | 13 | 3 | 5 |
| 2 | 47 | 15 | 0 | 17 | 13 | 3 | 5 |
| 3 | 45 | 12 | 0 | 22 | 13 | 3 | 5 |
| 4 | 45 | 9 | 0 | 22 | 16 | 3 | 5 |
| Comp 5 | 44 | 10 | 0 | 25 | 13 | 3 | 5 |
| 5 | 47 | 15 | 0 | 17 | 13 | 3 | 5 |
| Comp 6 | 47 | 15 | 0 | 17 | 13 | 3 | 5 |

**Tableau 2**

| | Composition du béton frais | | | | | | | | | | | | | | | |
|---|---|---|---|---|---|---|---|---|---|---|---|---|---|---|---|---|
| | teneur en % en masse (sur la base du béton non façonné) | | | | Ajout | % de Particules de (a) + (b) + (c) | | | | | % de particules | | Résultats des tests | | | |
| N° | Al₂O₃ | SiO₂ | ZrO₂ | fibres organiques | Eau (%) | < 0,5 µm | < 2 µm | < 10 µm | < 40 µm | < 500 µm | entre 2 et 40 µm | entre 40 et 500 µm | E (mm) | BAN ? | e (mm) | ségrégation ? |
| Comp 1 | 90,8 | 7 | 0,2 | 0 | 4,5 | 3,9 | 8,4 | 15,6 | 22,2 | 45,7 | 13,9 | 23,5 | 8 | Non | 0 | Non |
| Comp 2 | 90,8 | 7 | 0,2 | 0 | 6,1 | 3,9 | 8,4 | 15,6 | 22,2 | 45,7 | 13,9 | 23,5 | 2 | Oui | 5 | Oui |
| Comp 3 | 90,8 | 7 | 0,2 | 0 | 6,1 | 3,9 | 8,4 | 15,6 | 22,2 | 45,7 | 13,9 | 23,5 | 2 | Oui | 5 | Oui |
| Comp 4 | 95,9 | 2,5 | 0,1 | 0 | 5,5 | 6,4 | 11 | 27,9 | 36,3 | 57,2 | 25,3 | 20,9 | 4 | Non | 1 | Non |
| 1 | 95,8 | 2,5 | 0,1 | 0 | 5,6 | 6,4 | 11,1 | 28,7 | 37,6 | 58,1 | 26,5 | 20,5 | 2 | Oui | 0 | Non |
| 2 | 96 | 2,5 | 0,1 | 0 | 5,9 | 7 | 11,3 | 31,2 | 39,5 | 53,8 | 28,2 | 14,3 | 0 | Oui | 1 | Non |
| 3 | 96 | 2,5 | 0,1 | 0 | 5,7 | 6,4 | 11,4 | 35,1 | 43,6 | 55,6 | 32,2 | 12 | 1 | Oui | 1 | Non |
| 4 | 96 | 2,5 | 0,1 | 0 | 6 | 7,2 | 12,7 | 37,8 | 46,2 | 55,6 | 33,5 | 9,4 | 2 | Oui | 0 | Non |
| comp 5 | 96 | 2,5 | 0,1 | 0 | 6,4 | 6,4 | 11,5 | 37,5 | 46,3 | 56,5 | 34,8 | 10,2 | 4 | Non | 1 | Non |
| 5 | 96 | 2,5 | 0,1 | 0,03 | 6,1 | 7 | 11,3 | 31,2 | 39,5 | 53,8 | 28,2 | 14,3 | 1 | Oui | 1 | Non |
| Comp 6 | 96 | 2,5 | 0,1 | 0,04 | 6,3 | 7 | 11,3 | 31,2 | 39,5 | 53,8 | 28,2 | 14,3 | 3 | Non | 0 | Non |

Les résultats permettent de faire les constats suivants :
- Les exemples « Comp 1 », « Comp 2 » et « Comp 3 » ne présentent pas un caractère auto nivelant sans ségrégation.
- Une comparaison des exemples « Comp 1 » et « Comp 2 » montre qu'une augmentation de la teneur en eau (passage de 4,5% à 6,1%) ne suffit pas à donner un caractère auto nivelant sans ségrégation au béton frais. Le béton frais « Comp 2 » est auto nivelant, mais présente de la ségrégation. L'augmentation de la teneur en eau peut entraîner une dégradation des propriétés du béton durci.
- L'exemple « Comp 4 », hors invention, présente une répartition granulométrique différente de celle de l'exemple « Comp 1 », avec notamment un pourcentage de particules d'une taille comprise entre 2 µm et 40 µm égal à 25,3%. Cet exemple ne présente pas un caractère auto nivelant.
- L'exemple 1, selon l'invention, présente une répartition granulométrique proche de celle de l'exemple « Comp 4 », mais avec un pourcentage de particules d'une taille comprises entre 2 µm et 40 µm égal à 26,5% L'exemple 1 présente avantageusement un caractère auto nivelant sans ségrégation.
- Les exemples 2, 3 et 4, selon l'invention, présentent des compositions similaires à celles de l'exemple 1, avec un pourcentage de particules comprises entre 2 µm et 40 µm égal à 28,2%, 32,2% et 33,5%, respectivement. Ces exemples présentent également avantageusement un caractère auto nivelant sans ségrégation.
- L'exemple « Comp 5 », hors invention, présente une composition similaire à celle des exemples 1 à 4, avec cependant un pourcentage de particules comprises entre 2 µm et 40 µm égal à 34,8%. Cet exemple ne présente pas un caractère auto nivelant.
- Les exemples 2 et 5 montrent qu'une teneur limitée en fibres jusqu'à 0,03% ne dégrade pas le caractère auto nivelant. L'exemple « Comp 6 », hors invention, montre cependant qu'une teneur en fibres de 0,04% supprime le caractère auto nivelant.
- Le béton non façonné de l'exemple 2 est préféré entre tous.

Comme cela apparaît clairement à présent, l'invention fournit un béton non façonné permettant de fabriquer un béton frais « auto nivelant », c'est-à-dire qui peut être mis en place sans opération de vibration, et qui ne conduit pas à une ségrégation.

De plus, ce béton frais peut être pompé avec des pressions d'aspiration inférieures ou égales à 180 bar.

Enfin, d'autres essais ont montré qu'un béton durci et fritté selon l'invention ne génère que peu ou pas de défaut lorsqu'il est en contact avec du verre en fusion.

Un béton frais selon l'invention permet donc de fabriquer sans opération de vibration un béton durci et fritté, et en particulier une sole, notamment pour un four de verrerie où le béton durci et fritté entre en contact avec du verre en fusion. En dépit de l'absence d'opération de vibration, ce béton durci et fritté présente un excellent comportement en service.

Bien entendu la présente invention n'est pas limitée aux modes de réalisation décrits, fournis à titre d'exemples illustratifs et non limitatifs.

## Revendications

1. Béton non façonné comportant, en pourcentages en masse,
(a) 87% à 98% de particules comportant plus de 90% en masse d'alumine,
(b) 1% à 7% de particules de fumée de silice,
(c) 1% à 8% de particules d'un ciment hydraulique,
la fraction desdites particules ayant une taille inférieure à 40 µm étant distribuée, en pourcentages en masse par rapport à la masse du béton non façonné, de la manière suivante :
| | |
|---|---|
| - fraction < 0,5 µm : | ≥ 4%, |
| - fraction < 2 µm : | ≥ 5 %, |
| - fraction < 10 µm : | ≥ 19%, |
| - fraction < 40 µm : | 34% - 52%, |
| - fraction comprise entre 2 µm et 40 µm : | 26,5% - 34%, |
la teneur en ZrO₂, en pourcentages en masse sur la base du béton non façonné étant inférieure à 2%, et la teneur en fibres organiques, en pourcentage en masse sur la base du béton non façonné étant inférieure ou égale à 0,03%.

2. Béton non façonné selon la revendication précédente, comportant 0,075% à 1% d'un agent tensio-actif et/ou comportant un accélérateur de prise.

3. Béton non façonné selon l'une quelconque des revendications précédentes, dans lequel le ciment hydraulique constitue de 3% à 6% de la masse du béton non façonné.

4. Béton non façonné selon l'une quelconque des revendications précédentes, dans lequel les particules du béton non façonné se répartissent de la manière suivante, en pourcentages massiques :
| | |
|---|---|
| - fraction < 0,5 µm : | ≥ 5% et/ou |
| - fraction < 2 µm : | ≥ 7,5% et/ou |
| - fraction < 10 µm : | ≥ 25% et/ou |
| - fraction < 40 µm : | ≥ 35% et/ou |
| - fraction comprise entre 2 µm et 40 µm : | ≥ 27% et/ou ≤ 32% |

5. Béton non façonné selon l'une quelconque des revendications précédentes, dans lequel les particules du béton non façonné se répartissent de la manière suivante, en pourcentages massiques :
| | |
|---|---|
| - fraction < 0,5 µm : | ≤ 8% et/ou |
| - fraction < 2 µm : | ≥ 10% et/ou |
| - fraction < 10 µm : | ≤ 40% et/ou |
| - fraction < 40 µm : | ≤ 50%. |

6. Béton non façonné selon l'une quelconque des revendications précédentes, dans lequel les particules du béton non façonné se répartissent de la manière suivante, en pourcentages massiques :
| | |
|---|---|
| - fraction < 2 µm : | ≤ 16% et/ou |
| - fraction < 10 µm : | ≤ 35% et/ou |
| - fraction < 40 µm : | ≤ 47%. |

7. Béton non façonné selon l'une quelconque des revendications précédentes, qui présente une teneur en ZrO₂ inférieure à 1,5%.

8. Béton non façonné selon l'une quelconque des revendications précédentes, qui présente la composition massique suivante, pour un total de plus de 95% :
| | |
|---|---|
| - Al₂O₃ : | 81,5% - 98,5% |
| - SiO₂ : | ≥ 0,8%. |

9. Béton non façonné selon l'une quelconque des revendications précédentes, dans lequel l'agent tensio-actif est un éther polycarboxylate modifié.

10. Béton non façonné selon l'une quelconque des revendications précédentes, dans lequel la taille maximale des particules est inférieure ou égale à 10 mm.

11. Béton non façonné selon l'une quelconque des revendications précédentes, dans lequel la fraction des particules de taille inférieure à 500 µm représente plus de 50% de la masse dudit béton non façonné, et/ou la fraction des particules de taille comprise entre 40 µm et 500 µm est comprise entre 8 et 25% par rapport à la masse dudit béton non façonné.

12. Procédé de fabrication d'un béton durci et fritté, comportant les étapes successives suivantes :
1) préparation d'un béton non façonné ;
2) activation dudit béton non façonné de manière à obtenir un béton frais ;
3) mise en place dudit béton frais ;
4) durcissement dudit béton frais de manière à obtenir un béton durci;
5) frittage dudit béton durci ;
procédé selon lequel, à l'étape 1), le béton non façonné est conforme à l'une quelconque des revendications précédentes, et selon lequel, à l'étape 3), le béton frais est coulé et ne subit aucune opération de vibration avant son durcissement.

13. Procédé selon la revendication précédente, dans lequel, à l'étape 1), on utilise, comme source de fumée de silice, une matière première comportant plus de 90% de silice en masse, se présentant sous la forme d'une poudre dont les particules ont une taille comprise entre 0,1 et 5 µm et une taille médiane inférieure à 1 µm.

14. Procédé selon l'une quelconque des deux revendications immédiatement précédentes, dans lequel, à l'étape 2), on active ledit béton non façonné en y ajoutant une quantité d'eau comprise entre 5% et 9%, en pourcentage massique par rapport à la masse dudit béton non façonné.

15. Procédé selon l'une quelconque des trois revendications immédiatement précédentes, dans lequel, à l'étape 3), le béton frais est pompé au moyen d'une pompe produisant une pression d'aspiration inférieure ou égale à 180 bar et/ou acheminé sur le lieu du coulage par écoulement, par gravité, dans une goulotte, et/ou à l'étape 3), le béton frais est coulé de manière que ledit béton durci et fritté constitue une sole d'un four de verrerie.

## Patentansprüche

1. Ungeformter Beton enthaltend, in Prozentangaben in Masse,
(a) 87 % bis 98 % an Teilchen enthaltend mehr als 90 % in Masse an Aluminiumoxid,
(b) 1 % bis 7 % an Teilchen aus Silikastaub,
(c) 1 % bis 8 % an Teilchen eines hydraulischen Zements
wobei die Fraktion der besagten Teilchen, die eine Größe von geringer als 40 µm haben, in der folgenden Weise verteilt ist, in Prozentangaben in Masse im Verhältnis zu der Masse des ungeformten Betons:
| | |
|---|---|
| - Fraktion < 0,5 µm: | ≥ 4 %, |
| - Fraktion < 2 µm : | ≥ 5 %, |
| - Fraktion < 10 µm: | ≥ 19 %, |
| - Fraktion < 40 µm: | 34 % - 52 %, |
| - Fraktion zwischen 2 µm und 40 µm: | 26,5 % - 34 %, |
wobei der Gehalt an ZrO₂, in Prozentangaben in Masse auf Basis des ungeformten Betons, geringer als 2 % ist, und der Gehalt an organischen Fasern, in Prozentangaben in Masse auf Basis des ungeformten Betons, geringer als oder gleich 0,03 % ist.

2. Ungeformter Beton nach dem vorhergehenden Anspruch, enthaltend 0,075 % bis 1 % eines oberflächenaktiven Mittels und/oder enthaltend einen Abbindebeschleuniger.

3. Ungeformter Beton nach irgend einem der vorhergehenden Ansprüche, wobei der hydraulische Zement von 3 % bis 6 % der Masse des ungeformten Betons bildet.

4. Ungeformter Beton nach irgend einem der vorhergehenden Ansprüche, wobei sich die Teilchen des ungeformten Betons in der folgenden Weise aufteilen, in Massen-Prozentangaben:
| | |
|---|---|
| - Fraktion < 0,5 µm: | ≥ 5 % und/oder |
| - Fraktion < 2 µm : | ≥ 7,5 % und/oder |
| - Fraktion < 10 µm: | ≥ 25 % und/oder |
| - Fraktion < 40 µm : | ≥ 35 % und/oder |
| - Fraktion zwischen 2 µm und 40 µm: | ≥ 27 % und/oder ≤ 32 %. |

5. Ungeformter Beton nach irgend einem der vorhergehenden Ansprüche, wobei sich die Teilchen des ungeformten Betons in der folgenden Weise aufteilen, in Massen-Prozentangaben:
| | |
|---|---|
| - Fraktion < 0,5 µm: | ≤ 8 % und/oder |
| - Fraktion < 2 µm : | ≥ 10 % und/oder |
| - Fraktion < 10 µm: | ≤ 40 % und/oder |
| - Fraktion < 40 µm: | ≤ 50 %. |

6. Ungeformter Beton nach irgend einem der vorhergehenden Ansprüche, wobei sich die Teilchen des ungeformten Betons in der folgenden Weise aufteilen, in Massen-Prozentangaben:
| | |
|---|---|
| - Fraktion < 2 µm : | ≤ 16 % und/oder |
| - Fraktion < 10 µm: | ≤ 35 % und/oder |
| - Fraktion < 40 µm: | ≤ 47 %. |

7. Ungeformter Beton nach irgend einem der vorhergehenden Ansprüche, welcher einen Gehalt an ZrO₂ von geringer als 1,5 % aufweist.

8. Ungeformter Beton nach irgend einem der vorhergehenden Ansprüche, welcher die folgende Massen-Zusammensetzung aufweist, für eine Summe von mehr als 95 %:
| | |
|---|---|
| - Al₂O₃ : | 81,5 % - 98,5 % |
| - SiO₂: | ≥ 0,8 %. |

9. Ungeformter Beton nach irgend einem der vorhergehenden Ansprüche, wobei das oberflächenaktive Mittel ein modifizierter Polycarboxylatether ist.

10. Ungeformter Beton nach irgend einem der vorhergehenden Ansprüche, wobei die maximale Größe der Teilchen geringer als oder gleich 10 mm ist.

11. Ungeformter Beton nach irgend einem der vorhergehenden Ansprüche, wobei die Fraktion der Teilchen mit einer Größe von geringer als 500 µm mehr als 50 % der Masse des besagten ungeformten Betons darstellt, und/oder die Fraktion der Teilchen mit einer Größe zwischen 40 µm und 500 µm umfasst ist zwischen 8 und 25 % im Verhältnis zur Masse des besagten ungeformten Betons.

12. Verfahren zur Herstellung eines gehärteten und gesinterten Betons, enthaltend die folgenden aufeinanderfolgenden Schritte:
1) Bereitstellung eines ungeformten Betons;
2) Aktivierung des besagten ungeformten Betons um einen frischen Beton zu erhalten;
3) Einbringung des besagten frischen Betons;
4) Härten des besagten frischen Betons um einen gehärteten Beton zu erhalten;
5) Sintern des besagten gehärteten Betons;
nach welchem Verfahren, in Schritt 1), der ungeformte Beton gemäß irgend einem der vorhergehenden Ansprüche ist, und nach welchem, in Schritt 3), der frische Beton gegossen wird und keinen Vibrations-Arbeitsgang vor seinem Härten erfährt.

13. Verfahren nach dem vorhergehenden Anspruch, wobei man, in Schritt 1), als Quelle für den Silikastaub, eine erste Materie enthaltend mehr als 90 % an Siliziumoxid in Masse nutzt, die in Form eines Pulvers auftritt dessen Teilchen eine Größe zwischen 0,1 und 5 µm und eine Median-Größe von geringer als 1 µm haben.

14. Verfahren nach irgend einem der beiden unmittelbar vorhergehenden Ansprüche, wobei man, in Schritt 2), den besagten ungeformten Beton aktiviert durch Hinzufügen einer Menge von Wasser zwischen 5 % und 9 %, in Massen-Prozentangaben im Verhältnis zur Masse des besagten ungeformten Betons.

15. Verfahren nach irgend einem der drei unmittelbar vorhergehenden Ansprüche, wobei, in Schritt 3), der frische Beton gepumpt wird mit Hilfe einer Pumpe, die einen Ansaugdruck von geringer als oder gleich 180 bar erzeugt und/oder befördert wird zum Gießort durch Fließen durch Schwerkraft, in einem Kanal, und/oder in Schritt 3), der frische Beton gegossen wird so dass der besagte gehärtete und gesinterte Beton einen Boden eines Glasofens bildet.

## Claims

1. An unshaped concrete comprising, as percentages by weight,
(a) 87% to 98% of particles comprising more than 90% by weight of alumina,
(a) 1% to 7% of particles of silica fume,
(c) 1% to 8% of particles of a hydraulic cement,
the fraction of said particles having a size of less than 40 µm being distributed, as percentages by weight with respect to the weight of the unshaped concrete, in the following way:
| | |
|---|---|
| - fraction < 0.5 µm: | ≥ 4%, |
| - fraction < 2 µm : | ≥ 5%, |
| - fraction < 10 µm: | ≥ 19%, |
| - fraction < 40 µm: | 34% - 52%, |
| - fraction of between 2 µm and 40 µm: | 26.5% - 34% |
the content of ZrO₂, as percentage by weight on the basis of the unshaped concrete, being less than 2% and the content of organic fibers, as percentage by weight on the basis of the unshaped concrete, being less than or equal to 0.03%.

2. The unshaped concrete as claimed in the preceding claim, comprising from 0.075% to 1% of a surface-active agent and/or comprising a setting accelerator.

3. The unshaped concrete as claimed in either one of the preceding claims, in which the hydraulic cement constitutes from 3% to 6% of the weight of the unshaped concrete.

4. The unshaped concrete as claimed in any one of the preceding claims, in which the particles of the unshaped concrete are distributed in the following way, as percentages by weight:
| | |
|---|---|
| - fraction < 0.5 µm: | ≥ 5% and/or |
| - fraction < 2 µm: | ≥ 7.5% and/or |
| - fraction < 10 µm: | ≥ 25% and/or |
| - fraction < 40 µm: | ≥ 35% and ≤ 52%, and/or |
| - fraction of between 2 µm and 40 µm: | ≥ 27% and/or ≤ 32%. |

5. The unshaped concrete as claimed in any one of the preceding claims, in which the particles of the unshaped concrete are distributed in the following way, as percentages by weight:
| | |
|---|---|
| - fraction < 0.5 µm: | ≤ 8% and/or |
| - fraction < 2 µm: | ≥ 10% and/or |
| - fraction < 10 µm: | ≤ 40% and/or |
| - fraction ≤ 40 µm: | ≤ 50%. |

6. The unshaped concrete as claimed in any one of the preceding claims, in which the particles of the unshaped concrete are distributed in the following way, as percentages by weight:
| | |
|---|---|
| - fraction < 2 µm: | ≤ 16% and/or |
| - fraction < 10 µm: | ≤ 35% and/or |
| - fraction < 40 µm: | ≤ 47%. |

7. The unshaped concrete as claimed in any one of the preceding claims, which exhibits a ZrO₂ content of less than 1.5%.

8. The unshaped concrete as claimed in any one of the preceding claims, which exhibits the following composition by weight, for a total of more than 95%:
| | |
|---|---|
| - Al₂O₃: | 81.5% - 98.5% |
| - SiO₂: | ≥ 0.8%. |

9. The unshaped concrete as claimed in any one of the preceding claims, in which the surface-active agent is a modified polycarboxylate ether.

10. The unshaped concrete as claimed in any one of the preceding claims, in which the maximum size of the particles is less than or equal to 10 mm.

11. The unshaped concrete as claimed in any one of the preceding claims, in which the fraction of the particles with a size of less than 500 µm represents more than 50% of the weight of said unshaped concrete, and/or the fraction of the particles with a size of between 40 µm and 500 µm is between 8% and 25%, with respect to the weight of said unshaped concrete.

12. A process for the manufacture of a cured and sintered concrete, comprising the following successive stages:
1) preparation of an unshaped concrete;
2) activation of said unshaped concrete, so as to obtain a fresh concrete;
3) laying said fresh concrete;
4) curing said fresh concrete, so as to obtain a cured concrete;
5) sintering said cured concrete;
according to which process, in stage 1), the unshaped concrete is in accordance with any one of the preceding claims, and according to which process, in stage 3), the fresh concrete is poured and is not subjected to any vibration operation before it is cured.

13. The process as claimed in the preceding claim, in which, in stage 1), use is made, as source of silica fume, of a starting material comprising more than 90% of silica by weight, being provided in the form of a powder, the particles of which have a size of between 0.1 and 5 µm and a median size of less than 1 µm.

14. The process as claimed in either one of the two immediately preceding claims, in which, in stage 2), said unshaped concrete is activated by adding thereto an amount of water of between 5% and 9%, as percentage by weight, with respect to the weight of said unshaped concrete.

15. The process as claimed in any one of the three immediately preceding claims, in which, in stage 3), the fresh concrete is pumped by means of a pump producing a suction pressure of less than or equal to 180 bar and/or is transported to the pouring site by flowing, by gravity, in a shute, and/or in stage 3), the fresh concrete is poured so that said cured and sintered concrete constitutes a floor of a glass furnace.
